(19)

Europäisches
Patentamt

European
Patent Office

Office européen
des brevets

(11) **EP 2 653 836 A1**

(12) **EUROPEAN PATENT APPLICATION**

(43) Date of publication:
**23.10.2013 Bulletin 2013/43**

(51) Int Cl.:
***G01D 5/20*** *(2006.01)*

(21) Application number: **12164685.5**

(22) Date of filing: **19.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Research Ltd.**
**8050 Zürich (CH)**

(72) Inventors:
• **Chin, Robert**
  **722 46 Västerås (SE)**

• **Svechkarenko, Dmitry**
  **172 65 Sundbyberg (SE)**
• **Islam, Jahirul**
  **722 22 Västerås (SE)**

(74) Representative: **Savela, Reino Aleksi**
  **ABB AB**
  **Intellectual Property**
  **Ingenjör Bååths Gata 11**
  **721 83 Västerås (SE)**

(54) **Device and method for monitoring an eccentricity or a smallest air gap of a rotating electric machine**

(57)    A device for monitoring an eccentricity or a smallest air gap (25) of a rotating electric machine during operation thereof, the rotating electric machine having a rotor (21) and a stator (22), and the device comprises a plurality of sensing coils (1-8) wound around the core of the stator (22) at different circumferential locations and arranged to sense induced voltages caused by interaction of magnetic fluxes in the core of the stator (22) of the rotating electric machine; and a control device (23) operatively connected to the plurality of sensing coils (1-8) and arranged to receive the sensed induced voltages and to calculate an eccentricity or a smallest air gap (25) of the rotating electric machine based on the sensed induced voltages.

Fig. 2a

**Description**

**TECHNICAL FIELD OF THE INVENTION**

The present invention generally relates to the field of rotating electric machines and more specifically the invention relates to devices and methods for monitoring an eccentricity or a smallest air gap of a rotating electric machine during operation thereof.

**DESCRIPTION OF RELATED ART AND BACKGROUND OF THE INVENTION**

In a perfectly symmetrical electric machine, the sum of radial forces existing between the rotor and the stator is equal to zero. As a result of various faults occurred in the supporting structure of electric machine, such as wearing of bearings, heavy mechanical loads, deformations due to thermal expansion or other reasons, the air gap can become non-uniform and the rotational axis of the rotor can become misaligned from the concentric center of the stator, causing unbalance of the resultant radial force.

This misalignment, known as rotor eccentricity, would inevitably lead to a decreased machine performance, generate additional losses and increase noise level. In the worst cases it can permanently damage the electric machine. Therefore, it is vitally important to monitor the air gap thickness during operating conditions, and once the deviations is detected all necessary measures should be taken to avoid undesired consequences.

**SUMMARY OF THE INVENTION**

It is desirable to detect the rotor displacement with an accuracy such that the signals processed can be used as for monitoring or protection if a certain preset threshold value is defined, hence the electric machines can be stopped from operation for inspection and maintenance.

According to one aspect there is provided a device for monitoring an eccentricity or a smallest air gap of a rotating electric machine during operation thereof, wherein the rotating electric machine has a rotor and a stator. The device comprises a plurality of sensing coils wound around the core of the stator at different circumferential locations and arranged to sense induced voltages caused by interaction of magnetic fluxes in the core of the stator; and a control device operatively connected to the sensing coils and arranged to receive the sensed induced voltages and to calculate an eccentricity or a smallest air gap of the rotating electric machine based on the sensed induced voltages. The sensing coils are arranged in such a way that the monitoring of different types of eccentricity is possible.

The control device may be arranged to calculate the eccentricity of the rotating electric machine based on the sensed induced voltages by means of using an analytical model of the interaction of magnetic fluxes in the core of the stator. The analytical model may be deduced from numerical results with the finite element (FE) method.

The displacement amplitude and the displacement angle are calculated based on the sensed induced voltages by means of using for example the law of cosines, or any other available method.

According to another aspect there is provided a method for monitoring an eccentricity or a smallest air gap of a rotating electric machine during operation thereof, wherein the rotating electric machine has a rotor and a stator. According to the method induced voltages caused by interaction of magnetic fluxes in the core of the stator are measured by a plurality of sensing coils wound around the core of the stator at different circumferential locations; and an eccentricity or a smallest air gap of the rotating electric machine is calculated based on the sensed induced voltages.

The proposed approach using sensing coils poses a unique and attractive way to effectively detect the air gap non-uniformity. Not only an accurate displacement in distance, but an angle to a defined reference axis can be derived based on the signals measured at the various coils around the peripheral of the machines along the air gap.

The above aspects provide a simple and cost effective approach to significantly enhance the reliability of an electric machine. The approach does not require design alternations and it can easily be adapted to the needs of stator designs or requirements. The additional electronics and integrated circuits can be easily designed and manufactured.

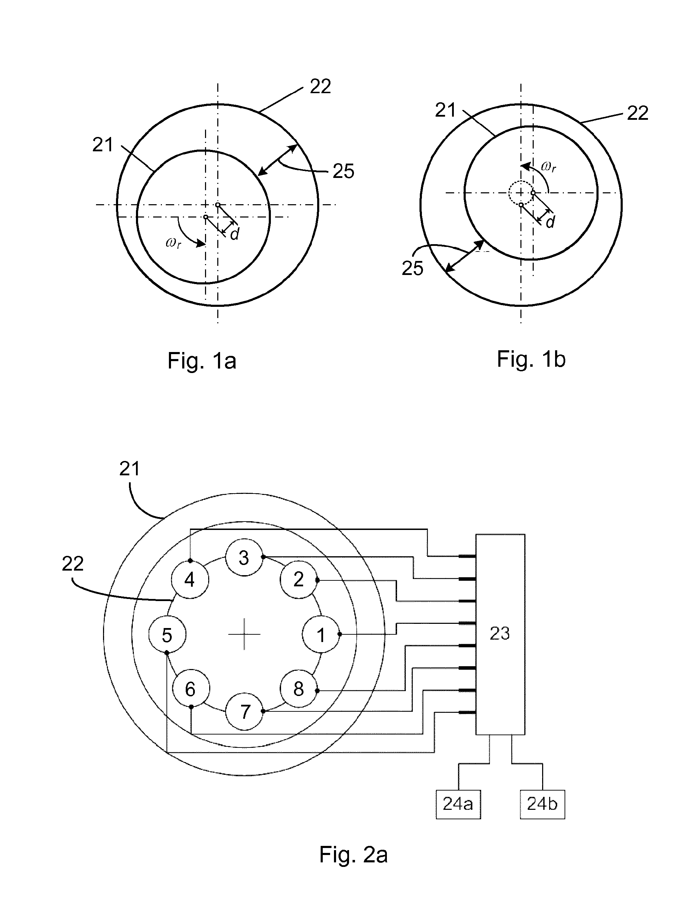

Further characteristics and advantages will be evident from the following detailed description of embodiments given hereinafter and the accompanying Figs. 1-7, which are given by way of illustration only, and shall thus not limit the scope of the patent claims.

**BRIEF DESCRIPTION OF THE DRAWINGS**

Figs. 1a-b illustrate, schematically, static and dynamic eccentricities in an electric machine.

Fig. 2a illustrates, schematically, a device for monitoring a smallest air gap as mounted in a rotating electric machine.

Fig. 2b illustrates, schematically, highly enlarged portions of an electric machine, in which a position of the sensing coils of Fig. 2a is indicated.

Fig. 2c illustrates, schematically, highly enlarged portions of an electric machine, in which an alternative position of the sensing coils of Fig. 2a is indicated.

Figs. 3a-b are diagrams showing voltages induced in a first sensing coil over time in an electric machine with no eccentricity (case 1 in Table 1) and in an electric machine with eccentricity (case 3 in Table 1).

Figs 4a-d are diagrams showing voltages induced in a first, second, third, and fourth sensing coil over time for the four different cases found in Table 1.

Fig. 4e is a diagram showing peak values of the voltages induced in the first, second, third, and fourth sensing coil for the four different cases found in Table 1.

Figs. 5a-d are diagrams showing the air gap thickness versus angular position for the four different cases in Table 1 as calculated using the FE model and as determined theoretically.

Fig. 6 is a schematic representation of a rotating electric machine, wherein an eccentricity is indicated, the magnitude and displacement angle of which being calculated by the law of cosines.

Fig. 7 is a diagram showing the variation of the air gap thickness during one mechanical period for an electric machine with dynamic eccentricity.

## DETAILED DESCRIPTION OF EMBODIMENTS

Different types of eccentricity can occur in electric machines. The following types are generally recognized in the literature:

Static eccentricity is achieved when the center of the rotor 21 is misaligned from the concentric center of the stator 22 by a defined displacement d, which during operating conditions remains constant resulting in a time independent non-uniform air gap 25 as being illustrated in Fig. 1a.

Dynamic eccentricity is described by a continuously varying air gap thickness with the rotor rotation axis following a certain pattern. As a result, the displacement d would vary in this case as being illustrated in Fig. 1b. Here, the rotor rotation axis follows a circular pattern.

A most common type of eccentricity in electric machines has inherited features of both static and dynamic eccentricity and is known as mixed eccentricity. This implies that there is not only a given misalignment between the stator and the rotor centers, but also that this displacement varies continuously in time.

Eccentricity in electric machines can be monitored in different ways. Some of these methods would require additional devices installed inside or outside of the machine (optical, electromagnetic, mechanical), while other can detect eccentricity by processing the measured currents or voltages and detect specific frequencies that appear in their signatures. In this text, sensing coils 1-8 are used to monitor the air gap eccentricity.

Different methods are available that can help to counterbalance the radial forces and pull rotor 21 back in its original position once eccentricity is detected. Some of these methods would require certain modifications inside the electric machines that should be made during the design and manufacturing stages.

Sensing coil 1-8 is a passive measuring device that consists of a copper (or any other conducting material) wire wound around magnetic core. The terminals of a sensing coil 1-8 can be connected to a voltmeter or an oscilloscope. By analyzing the terminal voltage of a sensing coil 1-8 the induced emf and hence the flux density in the magnetic core can be obtained.

By monitoring the voltages induced in the sensing coils 1-8, the presence and the type of eccentricity that occurs in the machine can be detected.

By measuring the variation of the induced voltage, the absolute value of the air gap thickness at every rotor position can be derived. To detect whether the eccentricity has static, dynamic or mixed nature, the induced voltage over one rotor revolution should be observed. The sampling frequency of the measuring signal should thus be selected large enough to ensure that the eccentricity can be identified in the measured signal.

When the sensing coils 1-8 are placed along the air gap circumference and the rotor 21 is moving, the voltage $e_{coil}$ is induced following the Faraday's law:

$$e_{coil} = n_s \, d\varphi_{coil}/dt$$

where <Pcoil is the flux linked to the sensing coil 1-8 and $n_s$ is the number of series connected turns that form the sensing coil 1-8.

In case when the electric machine is connected to the grid, the flux linked to the sensing coil 1-8 is due to the interaction of the magnetic flux $\varphi_m$ produced by the permanent magnets 21 b and the flux $\varphi_a$ due to the armature reaction. In the unsaturated core, the flux through the sensing coil 1-8 can be described by the following vector sum:

$$\vec{\varphi_r} = \vec{\varphi_m} + \vec{\varphi_a}$$

with $\varphi_r$ being the net flux in which the effect of saturation is not included.

To be able to estimate the induced voltage and thus the air gap thickness at any given instance of time and given rotor position, a prior knowledge of operating conditions is required. The sensing coil voltage can be determined analytically or with the help of FE analysis. The analytical method is faster but it is rather coarse as the estimation of slotting effect and leakage can be inaccurate. The FE method accounts for these phenomena but requires a longer time to develop and to process the model.

Fig. 2a illustrates a rotating electric machine, in which a device for monitoring an eccentricity or a smallest air gap 25 of the rotating electric machine during operation thereof is implemented. The rotating electric machine, which may be a permanent magnet electric machine, has a rotor 21 and a stator 22.

The device for monitoring an eccentricity comprises a plurality of sensing coils 1-8 wound around the core of the stator 22 at different circumferential locations and arranged to sense induced voltages caused by interaction of magnetic fluxes in the core of the stator 22 of the rotating electric machine, and a control device 23 operatively connected to the sensing coils 1-8 and arranged to receive the sensed induced voltages and to calculate an eccentricity or a smallest air gap 25 of the rotating electric machine based on the sensed induced voltages.

While the number of sensing coils 1-8 in the embodiment of Fig. 2a is eight, there may be another number of sensing coils 1-8 in another embodiment. For instance, the number of sensing coils 1-8 may be at least four, at least six, or at least ten. A minimum of two sensing coils 1-8 is required.

Advantageously, the sensing coils 1- 8 are evenly distributed along the circumference of the stator 22.

In one embodiment, the rotor 21 has a number of poles and the number of the sensing coils 1-8 is equal to the number of poles of the rotor 21.

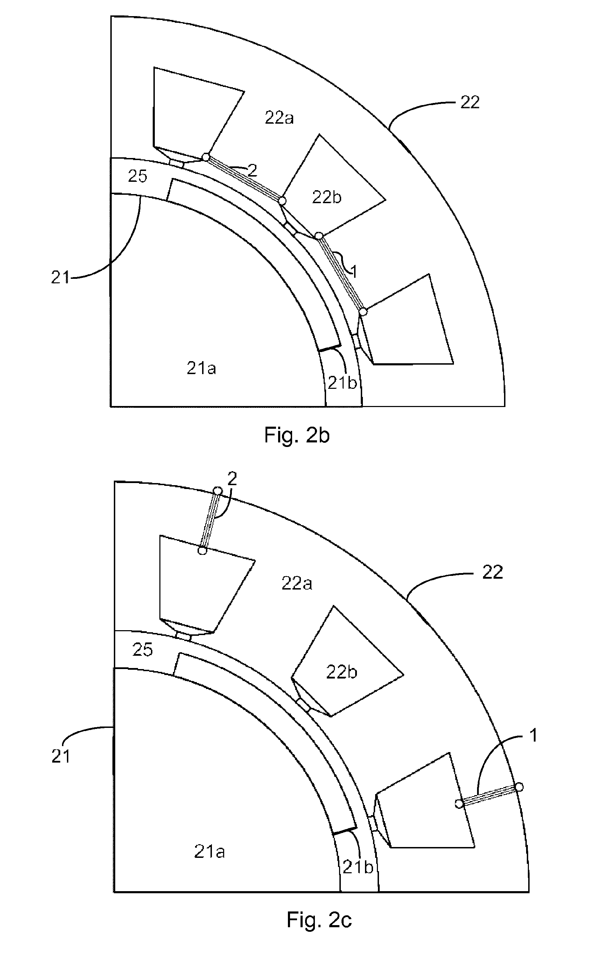

In another embodiment, the core of the stator 22 has a number of teeth 22a and each of the sensing coils 1-8 is wound around a respective one of the teeth 22a of the stator 22. This is illustrated in Fig. 2b. The rotor 21 has a rotor yoke 21a and permanent magnets 21b and the stator 22 has teeth 22a and stator slots 22b. The rotor 21 and the stator 22 are separated by an air gap 25, and two of the sensing coils 1, 2 are shown as wound around teeth 22a of the stator 22.

In an alternative embodiment the sensing coils 1, 2 are wound around the body of the stator 22 as being illustrated in Fig. 2c.

It shall be appreciated that the device for monitoring an eccentricity may comprise a display 24a operatively connected to the control device 23, wherein the display 24a is arranged to display the calculated eccentricity or smallest air gap 25 of the rotating electric machine.

Further, an alarm 24b may be operatively connected to the control device 23, wherein the alarm 24b is arranged to alarm an operator of the rotating electric machine in response to the calculated eccentricity or smallest air gap 25 of the rotating electric machine, preferably in response to the calculated eccentricity being larger than a threshold eccentricity or to the calculated smallest air gap 25 being smaller than a threshold air gap.

Alternatively, or additionally, the control device 23 may be arranged to lower the output power of the rotating electric machine in response to the calculated eccentricity or smallest air gap 25 of the rotating electric machine, preferably in response to the calculated eccentricity being larger than a threshold eccentricity or to the calculated smallest air gap 25 being smaller than a threshold air gap.

Yet alternatively, the control device 23 may be arranged to shut down the rotating electric machine in response to the calculated eccentricity or smallest air gap 25 of the rotating electric machine, preferably in response to the calculated eccentricity being larger than a threshold eccentricity or to the calculated smallest air gap 25 being smaller than a threshold air gap.

Yet further, the control device 23 may, in case the calculated eccentricity is larger than a threshold eccentricity, be arranged to counteract the calculated eccentricity by means of actively controlling the operation of the electric machine. This may be performed in a number of manners.

The control device 23 is arranged to calculate the eccentricity or the smallest air gap 25 of the rotating electric machine based on the sensed induced voltages by means of using a mathematical model of the interaction of magnetic fluxes in the core of the stator 22. The following FE analysis is employed for identification of the induced voltages in the sensing coils 1-8:

The induced sensing coil voltage is due to interaction of the permanent magnet flux and flux due to armature current. To investigate the contribution of each component, the three following FE models are created:

No-load model. In this model the armature current is set to zero while the flux linkage is due to the flux $\varphi_m$ originated by the permanent magnets 21 b acting alone.

Model with the armature reaction only. The magnets 21b in this case are turned off and the net flux $\varphi_r$ is due to armature reaction $\varphi_a$.

Load conditions, where the net flux $\varphi_r$ is due both fluxes $\varphi_m$ and $\varphi_a$ acting simultaneously.

Following the procedure described earlier, FE models to study the static and dynamic eccentricities are created in the FE software Flux2D. The results of these calculations are summarized below.

Four cases presented in Table 1 are selected for detailed analysis. It should be observed that case 1 with no eccentricity (healthy machine) is used as a reference when comparing with cases 2, 3 and 4 that have different degrees of eccentricity. In Table 1, d represents the absolute displacement of the rotation axis of the rotor 21 compared to the concentric center of the stator 22 in per unit (pu) values and the angle $\delta$ indicates the direction of the rotor displacement. The point at which angle $\delta$ is zero coincides with position of sensing coil 1 in Fig. 2a. Angle $\delta$ increases following the counterclockwise direction.

*Table 1. Eccentricity in the analyzed cases*

| Case | $d_x$ (pu) | $d_y$ (pu) | d (pu) | $\delta$ (mech.deg.) |
|------|-----------|-----------|--------|----------------------|
| 1    | 0         | 0         | 0      | 0                    |
| 2    | 0         | 0.333     | 0.333  | 90                   |
| 3    | 0.333     | 0.333     | 0.472  | 45                   |
| 4    | -0.333    | 0.167     | 0.373  | 153.4                |

The method explained in this document can be easily implemented in the electric machine equipped with the sensing coils 1-8, as the magnitude and direction of the displacement can be obtained by measuring and analyzing the induced voltages.

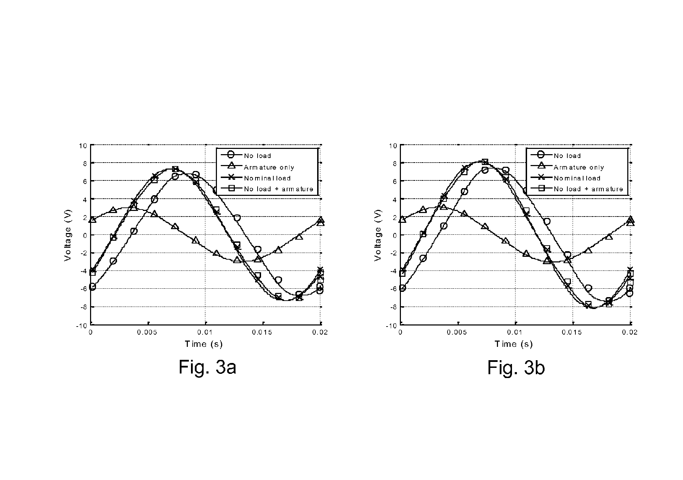

In Fig. 3a the variation of the induced voltages in sensing coil 1 for the healthy machine (case 1), and in Fig. 3b for the machine with the largest eccentricity among the studied (case 3), are presented. The voltage variation with time is shown for no load, with armature current only, their correspondent sum, as well as at load conditions. In the unsaturated machine, the sum of no load voltage and the voltage induced due to armature reaction should be equal to the voltage obtained at load. This however is not valid in the studied cases, as the locally saturated tooth tips would contribute to a certain discrepancy.

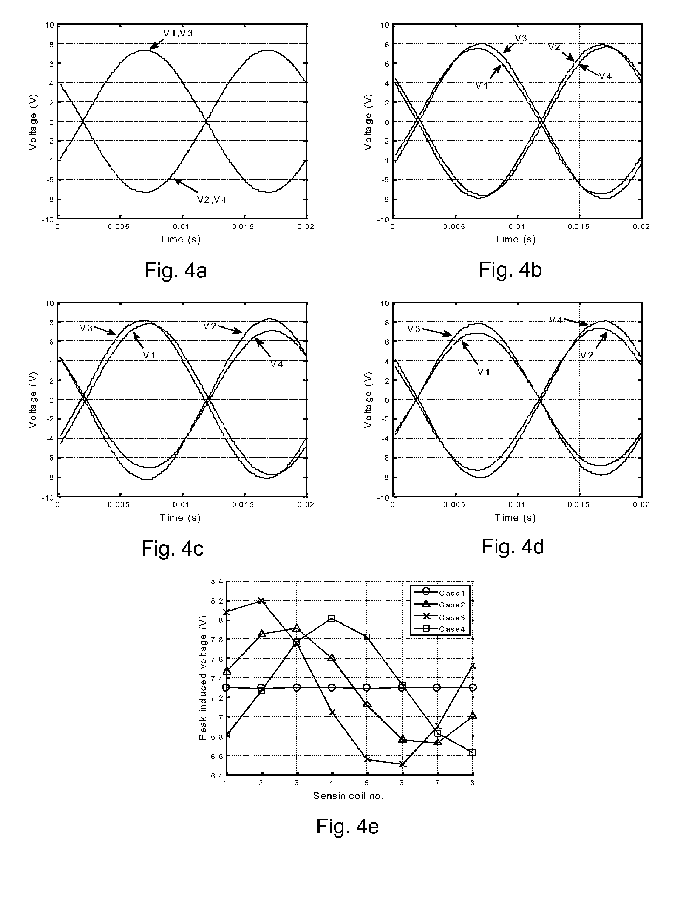

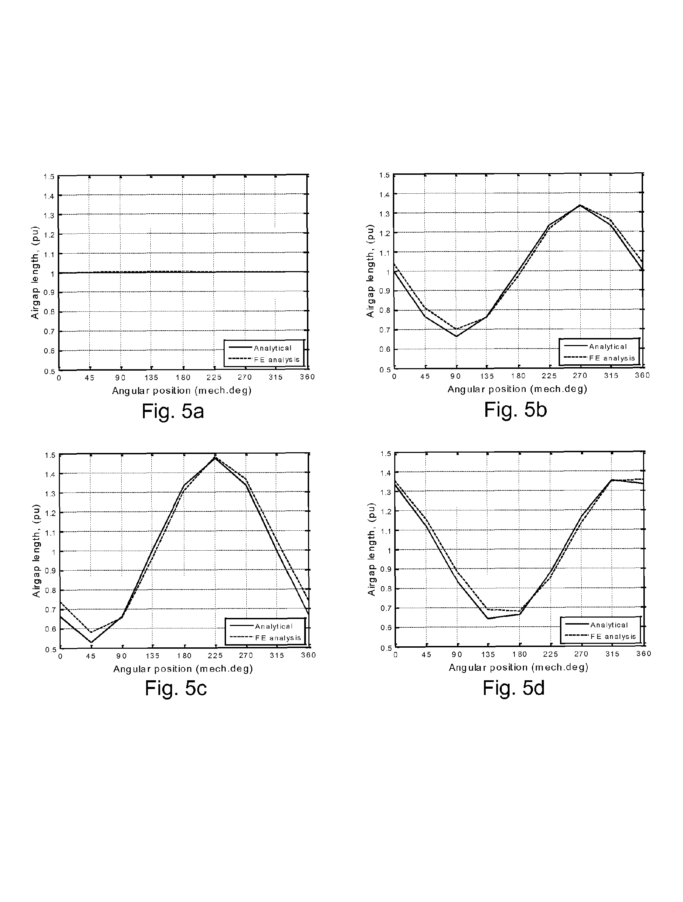

The variation of the voltages V1-V4 calculated in sensing coils 1 through 4 and their correspondent peak values are shown in Fig. 4a-d. In the healthy machine the peak voltages are the same in all sensing coils 1-4 (7.3 V) as shown in Fig. 4a, while they vary in other studied cases as shown in Figs. 4b-d, where Fig. 4b corresponds to case 2, Fig. 4c corresponds to case 3 and Fig. 5d corresponds to case 4 of Table 1. This can also be observed in Fig. 4e, where the peak voltages in different sensing coils 1-4 are plotted for electric machines with various degrees of eccentricity.

To estimate the air gap thickness in each of the analyzed cases, the voltages measured in the sensing coils 1-4 can be normalized with respect to the voltage in the healthy machine case 1. The normalization would be equal to the normalized flux density in the stator tooth 22a. If the leakage is disregarded, the flux density in the stator tooth 22a is equal to the flux density in the air gap 25. The magnetic flux density $B_m$ just above the magnets 21 b is given by:

$$B_m = B_{rm} / (1 + \mu_{rpm} (g_e/h_m))$$

where $B_{rm}$ is the magnet remanent flux density, $\mu_{rpm}$ is the magnet relative permeability, $h_m$ is the magnet height, and $g_e$ is the equivalent air gap thickness.

The equivalent air gap thickness takes the slotting effect into account. In the studied electric machine, the equivalent air gap thickness is around 1.4 times the actual physical thickness, $g_e = 1.4g$.

The air gap variation obtained in FE analysis for all studied cases is compared with the theoretically expected values in Figs. 5a-d, where Fig. 5a corresponds to case 1, Fig. 5b corresponds to case 2, Fig. 5c corresponds to case 3 and Fig. 5d corresponds to case 4. As it can be seen, the shape and the magnitude of the curves are rather similar, while a phase shift exists between the analytical and FE values.

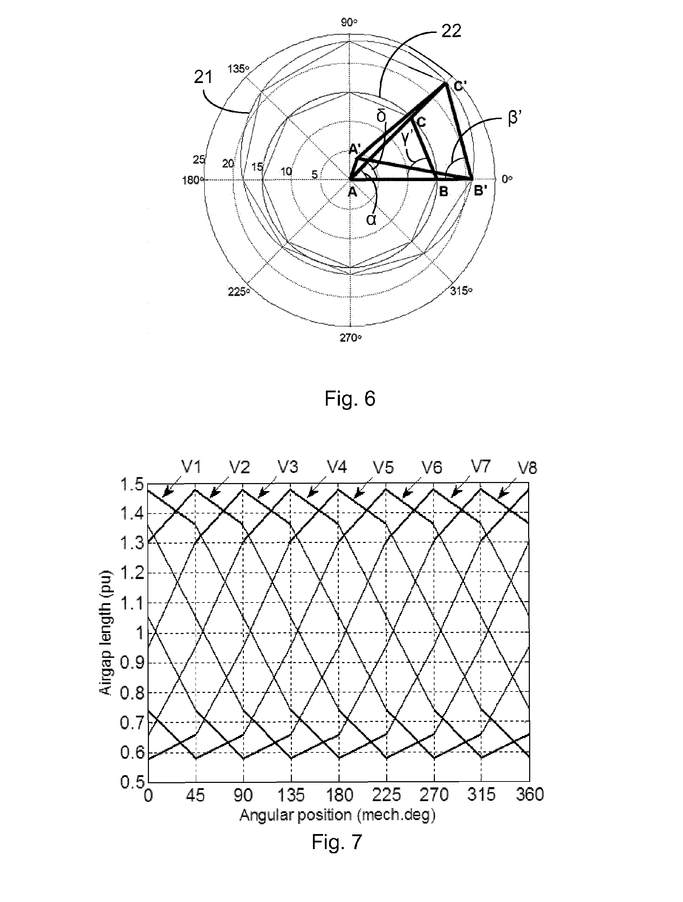

Once the variation of the air gap thickness is known, the eccentricity for each of studied cases can be calculated. One possible way to determine the magnitude and the angle of displacement is by using the law of cosines which relates the lengths of the sides of a triangle to the cosine of one of the angles. The mathematical procedure applied for the eccentricity analysis is described below with reference to Fig.6.

Provided that AB and AC are the stator radius; A'B' and A'C' are the rotor radius; BB' and CC' are the air gap thicknesses measured under sensing coil 1 and sensing coil 2; and $\alpha$ is the angle between the adjacent sensing coils, for example 1 and 2, the displacement AA' and its correspondent angle $\delta$ can be obtained as follows:

1. Triangle ABC      $BC = (AB^2 + AC^2 - 2\,AB\,AC\cos\alpha)^{1/2}$

2. Triangle AB'C'     $AB' = AB + BB'$
   $AC' = AC' + CC'$
   $B'C' = (AB'^2 + AC'^2 - 2\,A'B'\,AC\cos\alpha)^{1/2}$
   $(\beta'+\gamma') = \cos^{1}((AB'^2 + B'C'^2 - AC'^2)/2A'B'BC')$

3. Triangle A'B'C'     $\beta' = \cos^{-1}(A'B'^2 + B'C'^2 - AC'^2)/2A'B'BC'$
   $\gamma' = (\beta'+\gamma') - \beta'$

4. Triangle AA'B'     $AA' = (AB'^2 + A'B'^2 - 2\,AB'\,A'B'\cos\gamma')^{-1/2}$
   $\delta = \cos^{-1}(AA'^2 + AB'^2 - A'B'^2)/2AA'AB'$

The results of the analysis are summarized in Table 2. As can be seen, the displacement can be quite accurately predicted in all the studied cases, around 1%. This would however require a prior knowledge of the machine parameters in order to determine the equivalent air gap thickness and the flux density in the air gap 25. The angle of displacement is generally more difficult to predict. However, by applying the described method, the angle could be calculated quite accurately. As shown in Table 2, the discrepancy in the studied cases is within 4-6 mechanical degrees.

*Table 2. Displacement and the angle eccentricity*

| Case | Input | | Finite element | |
|---|---|---|---|---|
| | d (pu) | $\delta$ (mech.deg.) | d (pu) | $\delta$ (mech.deg.) |
| 1 | 0 | 0 | 0 | 0 |
| 2 | 0.333 | 90 | 0.332 | 95.3 |
| 3 | 0.472 | 45 | 0.479 | 49.2 |
| 4 | 0.373 | 153.4 | 0.379 | 159.3 |

The model of the electric machine with dynamic eccentricity is developed with necessary adjustments. As opposed to the previous case, the analysis has been performed for a whole rotor revolution, as the magnitude as well as the direction of eccentricity will be continuously varying in time.

In case of machine with no eccentricity (case 1), the air gap thickness is uniform and time independent. In case of static eccentricity, the air gap thickness is non-uniform but constant in time for all the measured locations, while in case of dynamic eccentricity the air gap thickness will be continuously varying. This variation can be observed in Fig. 7 where the air gap thickness opposite to the sensing coil 1 through sensing coil 8 is depicted for case 3 in Table 1. As center of the rotor 21 in the study of dynamic eccentricity is assumed to follow a circumference, the peak values of the induced voltages would vary sinusoidally.

It will be obvious that the invention may be varied in a plurality of ways within the scope of the appended patent claims.

**Claims**

1. A device for monitoring an eccentricity or a smallest air gap (25) of a rotating electric machine during operation thereof, the rotating electric machine having a rotor (21) and a stator (22), **characterized in that** the device comprises:

   - a plurality of sensing coils (1-8) wound around the core of the stator at different circumferential locations and arranged to sense induced voltages caused by interaction of magnetic fluxes in the core of the stator of the rotating electric machine; and
   - a control device (23) operatively connected to said plurality of sensing coils and arranged to receive said sensed induced voltages and to calculate an eccentricity or a smallest air gap of said rotating electric machine based on said sensed induced voltages.

2. The device of claim 1 wherein

   - said plurality of sensing coils are arranged to sense induced voltages caused by interaction of magnetic fluxes in the core of the stator during at least one full revolution of the rotating electric machine; and
   - said control device is arranged to receive said sensed induced voltages during said at least one full revolution of the rotating electric machine and to calculate an eccentricity or a smallest air gap of said rotating electric machine based on said sensed induced voltages during said at least one full revolution of the rotating electric machine.

3. The device of claim 1 or 2 wherein said control device is arranged to calculate a static eccentricity of said rotating electric machine based on said sensed induced voltages, wherein the static eccentricity is determined by a constant displacement amplitude (d) and a constant displacement angle ($\delta$).

4. The device of any of claims 1-3 wherein said control device is arranged to calculate a dynamic eccentricity of said rotating electric machine based on said sensed induced voltages, wherein the dynamic eccentricity is determined by a continuously varying displacement amplitude (d) and a continuously varying displacement angle ($\delta$).

5. The device of claim 3 or 4 wherein the displacement amplitude and the displacement angle are calculated based on the sensed induced voltages by means of using the law of cosines.

6. The device of any of claims 1-5 wherein said control device is arranged to calculate the eccentricity or the smallest air gap of said rotating electric machine based on said sensed induced voltages by means of using a mathematical model of the interaction of magnetic fluxes in the core of the stator.

7. The device of claim 6 wherein the mathematical model is based on the finite element method.

8. The device of any of claims 1-7 wherein the number of said plurality of sensing coils is at least two, preferably, at least four, more preferably at least six, and most preferably at least eight.

9. The device of any of claims 1-8 wherein the rotor has a number of poles, and the number of said plurality of sensing coils is equal to the number of poles of the rotor.

10. The device of any of claims 1-9 wherein said plurality of sensing coils is evenly distributed along the circumference of the stator.

11. The device of any of claims 1-10 wherein the core of the stator has a number of teeth (22a), and each of said plurality of sensing coils is wound around a respective one of the teeth of the stator.

12. The device of any of claims 1-11 wherein the electrical period of the rotating electric machine is equal or shorter than the period of one full revolution of the rotating electric machine.

13. The device of any of claims 1-12 wherein the rotating electric machine is a permanent magnet electric machine.

14. The device of any of claims 1-13 wherein the rotating electric machine is a generator, preferably a generator provided for a wind power plant.

**15.** The device of any of claims 1-14 comprising a display (24a) operatively connected to said control device, wherein the display is arranged to display the calculated eccentricity or smallest air gap of said rotating electric machine.

**16.** The device of any of claims 1-15 comprising alarm means (24b) operatively connected to said control device, wherein the alarm means is arranged to alarm an operator of the rotating electric machine in response to the calculated eccentricity or smallest air gap of said rotating electric machine, preferably in response to the calculated eccentricity being larger than a threshold eccentricity or to the calculated smallest air gap being smaller than a threshold air gap.

**17.** The device of any of claims 1-16 wherein said control device is arranged to lower the output power of said rotating electric machine in response to the calculated eccentricity or smallest air gap of said rotating electric machine, preferably in response to the calculated eccentricity being larger than a threshold eccentricity or to the calculated smallest air gap being smaller than a threshold air gap.

**18.** The device of any of claims 1-16 wherein said control device is arranged to shut down the rotating electric machine in response to the calculated eccentricity or smallest air gap of said rotating electric machine, preferably in response to the calculated eccentricity being larger than a threshold eccentricity or to the calculated smallest air gap being smaller than a threshold air gap.

**19.** The device of any of claims 1-16 wherein said control device, in case the calculated eccentricity is larger than a threshold eccentricity, is arranged to counteract the calculated eccentricity by means of passively or actively controlling the operation of the electric machine.

**20.** A method for monitoring an eccentricity or a smallest air gap of a rotating electric machine during operation thereof, the rotating electric machine having a rotor (21) and a stator (22), **<u>characterized in</u> that** the method comprises the steps of:

- sensing induced voltages caused by interaction of magnetic fluxes in the core of the stator of the rotating electric machine by means of a plurality of sensing coils (1-8) wound around the core of the stator at different circumferential locations; and
- calculating an eccentricity or a smallest air gap of said rotating electric machine based on said sensed induced voltages.

Fig. 1a

Fig. 1b

Fig. 2a

EP 2 653 836 A1

Fig. 2b

Fig. 2c

Fig. 3a

Fig. 3b

Fig. 4a

Fig. 4b

Fig. 4c

Fig. 4d

Fig. 4e

Fig. 5a

Fig. 5b

Fig. 5c

Fig. 5d

Fig. 6

Fig. 7

| | Europäisches Patentamt European Patent Office Office européen des brevets | **EUROPEAN SEARCH REPORT** | | **Application Number** EP 12 16 4685 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 3 107615 A (SHIMADZU CORP) 8 May 1991 (1991-05-08) * abstract; figure 2 * ----- | 1-20 | INV. G01D5/20 |
| X | EP 1 580 533 A2 (MINEBEA CO LTD [JP]) 28 September 2005 (2005-09-28) * abstract; figure 3 * ----- | 1,20 | |
| X | JP 2006 280158 A (TOYOTA MOTOR CORP) 12 October 2006 (2006-10-12) * abstract; figure 3 * ----- | 1,20 | |
| | | | TECHNICAL FIELDS SEARCHED (IPC) G01D |

The present search report has been drawn up for all claims

| Place of search | Date of completion of the search | Examiner |
|---|---|---|
| Munich | 20 August 2012 | Flierl, Patrik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 16 4685

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2012

| Patent document cited in search report | | Publication date | Patent family member(s) | | Publication date |
|---|---|---|---|---|---|
| JP 3107615 | A | 08-05-1991 | NONE | | |
| EP 1580533 | A2 | 28-09-2005 | EP | 1580533 A2 | 28-09-2005 |
| | | | JP | 4142607 B2 | 03-09-2008 |
| | | | JP | 2005283165 A | 13-10-2005 |
| | | | US | 2005212511 A1 | 29-09-2005 |
| JP 2006280158 | A | 12-10-2006 | NONE | | |

EPO FORM P0459